# EUROPEAN PATENT SPECIFICATION

(11) **EP 3 136 793 B1**
(45) Date of publication and mention of the grant of the patent: **25.07.2018**
(21) Application number: 16161754.3
(22) Date of filing: 22.03.2016
(51) Int. Cl.: H04W 52/02, H04L 12/28

(54) **METHOD AND APPARATUS FOR AWAKENING ELECTRONIC DEVICE**
VERFAHREN UND VORRICHTUNG ZUM AUFWECKEN EINER ELEKTRONISCHEN VORRICHTUNG
PROCÉDÉ ET APPAREIL DE DÉCLENCHEMENT D'UN DISPOSITIF ÉLECTRONIQUE

(30) Priority: 28.08.2015 CN 201510542949
(43) Date of publication of application: 01.03.2017
(73) Proprietor: Xiaomi Inc., Beijing 100085 (CN)
(72) Inventor: CHEN, Hong, Beijing 100085 (CN); DING, Yi, Beijing 100085 (CN); LI, Feiyun, Beijing 100085 (CN)
(74) Representative: Robson, Aidan John

(56) References cited:
- US-A1- 2006 251 059
- US-A1- 2013 332 979
- US-A1- 2014 126 442

## Description

### FIELD

The present disclosure relates to the field of communication technology, and more particularly, to a method for awakening an electronic device and an apparatus for awakening an electronic device from hibernate mode.

### BACKGROUND

Currently, an intelligent television may access a router of a local area network via its own wireless fidelity (Wi-Fi) module to obtain Internet video resources. Users may control the television in various manners, such as an infrared remote controller and a bluetooth remote controller. In the related art, a smart home application installed in an intelligent terminal may control the intelligent television by controlling the Wi-Fi module.

A common Wi-Fi module may include a Wi-Fi chip and a major microcontroller unit (MCU) chip. However, when the intelligent television enters a hibernate mode, the major MCU chip will enters the hibernate mode and the Wi-Fi chip will enter a low power mode in order to reduce the power consumption, which may make the Wi-Fi module stop working. In such a case, the users cannot open the intelligent television remotely via the smart home application, which causes inconvenience.

US patent application publication number US 2013/332979 A1 discloses a method, device, and storage medium for selecting a remote control mode of operation for a mobile device to allow the mobile device to remotely control a program receiving device. Additionally, the method, device, and storage medium provides a proxy service to allow the mobile device to remotely control a program receiving device, an over-the-top service to allow the mobile device to remotely control a program receiving device, and a direct link service to allow the mobile device to remotely control a program receiving device. The method, device, and storage medium also provide a notification protocol.

### SUMMARY

Accordingly, embodiments of the present disclosure provide a method for awakening a first electronic device from hibernate mode using a second electronic device and an apparatus for awakening a first electronic device in order to solve the problem of awakening an electronic device in a hibernate mode remotely and the problem of inconvenience.

According to a first aspect of embodiments of the present disclosure, there is provided a method for awakening a first electronic device from hibernate mode using a second electronic device. The method includes:
obtaining a same local area network as the first electronic device according to a pre-maintained correspondence relationship between a local area network and the first electronic device accessing the local area network, wherein the correspondence relationship is maintained on the second electronic device;
activating a target electronic device in a same target local area network as a first electronic device; and
sending a start-up instruction to the target electronic device, such that the target electronic device broadcasts in the target local area network an awakening message for awakening the first electronic device according to the awakening instruction.

Optionally, obtaining a target electronic device in a same target local area network as the first electronic device includes:
activating the target electronic device in response to a detected selection of an awakening button for awakening the first electronic device.

Optionally, the awakening button is a virtual button for controlling an interface of the first electronic device.

Optionally, obtaining a target electronic device in a same target local area network as the first electronic device includes:
obtaining the target electronic device in response to a detected presence of contact information in an icon for awakening the first electronic device.

Optionally, the icon is a virtual slider icon for controlling an interface of the first electronic device.

According to a second aspect of embodiments of the present disclosure, there is provided a method according to the first aspect of embodiments. The method includes, at the target electronic device:
receiving an awakening instruction for awakening the first electronic device;
generating an awakening message according to the awakening instruction; and
broadcasting the awakening message in a current target local area network, such that the first electronic device in the same target local area network executes an awakening operation after receiving the awakening message.

Optionally, the awakening message is a Wi-Fi awakening message.

According to a third aspect of embodiments of the present disclosure, there is provided a method according to the first aspect of embodiments. The method includes, at the first electronic device:
receiving an awakening message broadcast by a target electronic device after the first electronic device has entered a hibernate mode; and
executing an awakening operation according to the awakening message.

Optionally, receiving an awakening message sent by a target electronic device includes:
receiving the awakening message sent by the target electronic device via a Wi-Fi chip of the first electronic device.

Optionally, executing an awakening operation includes:
awakening a major MCU chip of the first electronic device.

Optionally, the first electronic device may be an intelligent television.

According to a fourth aspect of embodiments of the present disclosure, there is provided an apparatus for awakening a first electronic device from hibernate mode. The apparatus includes:
a processor;
a memory configured to store an instruction executable by the processor;
in which the processor is configured to perform the method for awakening a first electronic device from hibernate mode according to the first aspect of invention.

According to an fifth aspect of embodiments of the present disclosure, there is provided a system comprising an apparatus according to the fourth aspect of embodiments. The system includes:
a processor;
a memory configured to store an instruction executable by the processor;
in which the processor is configured to perform the method for awakening a first electronic device from hibernate mode according to the second aspect of the embodiments.

According to a sixth aspect of embodiments of the present disclosure, there is system comprising an apparatus according to the fourth or fifth aspects of embodiments. The system includes:
a processor;
a memory configured to store an instruction executable by the processor;
in which the processor is configured to perform the method for awakening a first electronic device from a hibernate mode according to the third aspect of embodiments.

According to a seventh aspect of embodiments of the present disclosure, there is provided a non-transitory computer-readable storage medium having stored therein instructions that, when executed by a processor of a device, causes the device to perform the method for awakening a first electronic device according to the first or the second or the third aspects of embodiments of the present disclosure.

According to the embodiments of the present disclosure, the technical solution may include the following advantageous effects.

In the embodiments of the present disclosure, when the electronic device detects the electronic device to be awakened that enters a hibernate mode, the electronic device will obtain a target electronic device in the same target local area network as the electronic device to be awakened, and send an awakening instruction to the target electronic device, such that the target electronic device broadcasts an awakening message for awakening the electronic device to be awakened in the target local area network according to the awakening instruction. Through the above process, the electronic device may awaken the electronic device to be awakened that enters the hibernate mode remotely, which brings about great convenience.

In the embodiments of the present disclosure, the electronic device may maintain the correspondence relationship between a local area network and an electronic device accessing the local area network in advance, and then obtain the target electronic device that accesses the target local area network according to the correspondence relationship, so as to send the awakening instruction to the target electronic device and to achieve the purpose of remotely awakening the electronic device to be awakened that enters the hibernate mode, which brings about great convenience.

In the embodiments of the present disclosure, the Wi-Fi chip of the electronic device to be awakened may receive the awakening message broadcast by the target electronic device via the target local area network, so as to awaken the major MCU chip of the electronic device to be awakened according to the received awakening message. In such a way, it is possible to achieve the purpose of remotely awakening the electronic device to be awakened that enters the hibernate mode and to bring about great convenience thereby.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a flow chart showing a method for awakening an electronic device according to an exemplary embodiment of the present disclosure.
Fig. 2 is a flow chart showing another method for awakening an electronic device according to an exemplary embodiment of the present disclosure.
Fig. 3 is a flow chart showing another method for awakening an electronic device according to an exemplary embodiment of the present disclosure.
Fig. 4 is a flow chart showing another method for awakening an electronic device according to an exemplary embodiment of the present disclosure.
Fig. 5 is a flow chart showing another method for awakening an electronic device according to an exemplary embodiment of the present disclosure.
Figs. 6A to 6C are schematic diagrams illustrating scenes of awakening an electronic device according to an exemplary embodiment of the present disclosure.
Fig. 7 is a block diagram showing an apparatus for awakening an electronic device according to an exemplary embodiment of the present disclosure.
Fig. 8 is a block diagram showing another apparatus for awakening an electronic device according to an exemplary embodiment of the present disclosure.
Fig. 9 is a block diagram showing another apparatus for awakening an electronic device according to an exemplary embodiment of the present disclosure.
Fig. 10 is a block diagram showing another apparatus for awakening an electronic device according to an exemplary embodiment of the present disclosure.
Fig. 11 is a block diagram showing another apparatus for awakening an electronic device according to an exemplary embodiment of the present disclosure.
Fig. 12 is a block diagram showing another apparatus for awakening an electronic device according to an exemplary embodiment of the present disclosure.
Fig. 13 is a block diagram showing another apparatus for awakening an electronic device according to an exemplary embodiment of the present disclosure.
Fig. 14 is a block diagram showing another apparatus for awakening an electronic device according to an exemplary embodiment of the present disclosure.
Fig. 15 is a block diagram showing an apparatus for awakening an electronic device according to an exemplary embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

Terms used herein in the description of the present disclosure are only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It shall be understood that terms such as "first," "second," and "third" may be used to describe various information in the present disclosure, but the information are not limited to the terms which are used to distinguish information of the same type from each other. For example, first information may be called second information, and similarly, the second information may be called the first information, without departing from the scope of the present disclosure. As used herein, the term "if' may be construed to mean "when" or "upon" or "in response to determining" depending on the context.

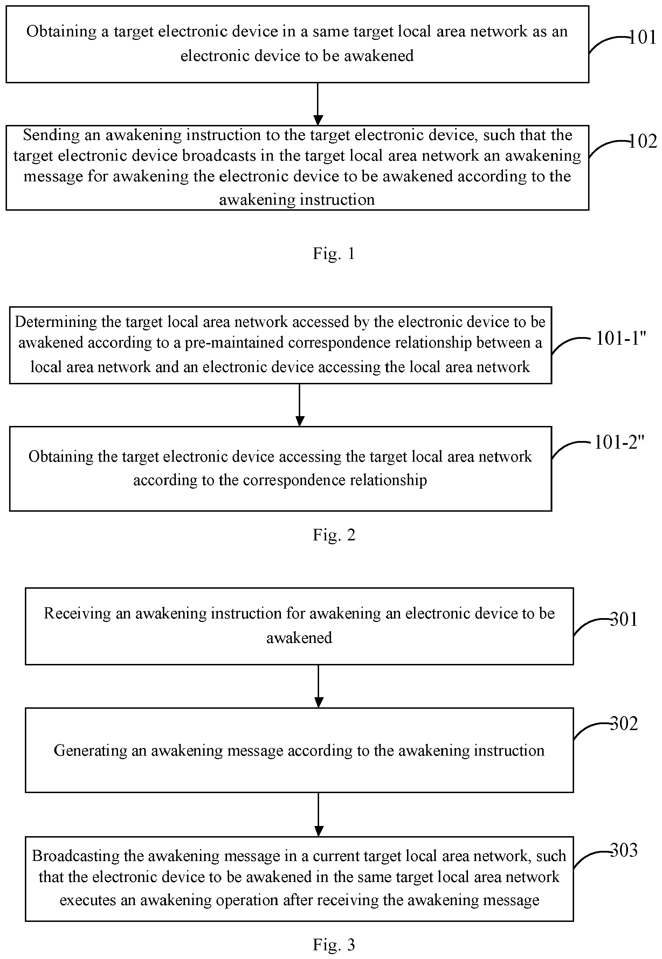

As shown in Fig. 1 that is a flow chart showing a method for awakening an electronic device according to an exemplary embodiment of the present disclosure, the method includes the following steps.

In step 101, a target electronic device in a same target local area network as an electronic device to be awakened is obtained.

The electronic device involved in embodiments of the present disclosure may be various intelligent terminals, such as a smart phone, a tablet computer and a personal digital assistant (PAD); the electronic device to be awakened may be an intelligent device provided with a Wi-Fi module, like an intelligent television.

Alternatively, it is possible to determine the target electronic device to be obtained in any one of the following ways.

First way: the electronic device determines the target electronic device to be obtained after an awakening button is selected.

The step 101 may include step 101-1 of obtaining the target electronic device in response to a detected selection of the awakening button for awakening the electronic device to be awakened.

In step 101-1, the electronic device may detect whether the awakening button is selected through the related technology. Alternatively, the awakening button is a virtual button for controlling an interface of the electronic device to be awakened. When the awakening button is selected, the electronic device will obtain the target electronic device in the same target local area network as the electronic device to be awakened.

Second way: the electronic device determines the target electronic device to be obtained after an icon is clicked.

The step 101 may include step 101-1' of obtaining the target electronic device in response to a detected presence of contact information in the icon for awakening the electronic device to be awakened.

In step 101-1', the user may click the icon preset in the electronic device. Alternatively, the icon is a virtual slider icon for controlling an interface of the electronic device to be awakened. When the electronic device detects the presence of the contact information in the icon, the target electronic device needs obtaining.

In the embodiment of the present disclosure, the process of obtaining the target electronic device is further as shown in Fig. 2. Fig. 2 is a flow chart showing another method for awakening an electronic device according to an exemplary embodiment of the present disclosure. The method includes the following steps.

In step 101-1", the target local area network accessed by the electronic device to be awakened is determined according to a pre-maintained correspondence relationship between a local area network and an electronic device accessing the local area network.

In this step, the electronic device maintains the correspondence relationship between the local area network and the electronic device accessing the local area network in advance, and first determines the target local area network accessed by the electronic device to be awakened according to the pre-maintained correspondence relationship.

In step 101-2", the target electronic device that accesses the target local area network is obtained according to the correspondence relationship.

After the target local area network is determined, the target electronic device that also accesses the target local area network is further obtained according to the correspondence relationship.

In step 102, an awakening instruction is sent to the target electronic device, such that the target electronic device broadcasts in the target local area network an awakening message for awakening the electronic device to be awakened according to the awakening instruction.

In this step, the electronic device generates the awakening instruction through the known technology and sends the awakening instruction to the target electronic device, after obtaining the target electronic device.

The target electronic device generates the awakening message through the known technology according to the received awakening instruction. Alternatively, the awakening message is a Wi-Fi awakening message received by a Wi-Fi chip that enters a low-power mode in the related art. The target electronic device may broadcast the awakening message in the target local area network to ensure that the electronic device to be awakened may receive the Wi-Fi awakening message.

After the electronic device to be awakened enters the hibernate mode, a major MCU chip thereof will enter the hibernate mode and the Wi-Fi chip thereof will enter the low power mode. The major MCU chip of the electronic device to be awakened is preset its own mechanism of being awakened, which may be in such a way that the major MCU chip will not be awakened until the Wi-Fi chip of the electronic device receives the Wi-Fi awakening message. The electronic device to be awakened may receive the awakening message broadcast by the target electronic device in the same local area network via the Wi-Fi chip, and hence awaken the major MCU chip according to the awakening message.

The above process may be realized by a device control application installed in the electronic device in advance. The device control application is logged in by a device identifier of the electronic device. When the device control application detects that the virtual awakening button is selected or the virtual slider icon is clicked, the target local area network accessed by the electronic device to be awakened is determined first according to the pre-maintained correspondence relationship, and the target electronic device that also accesses the target local area network is obtained according to the correspondence relationship.

The device control application generates and sends the awakening instruction to the target electronic device through the related technology. The target electronic device generates the Wi-Fi awakening message through the known technology according to the awakening instruction, and broadcasts the Wi-Fi awakening message to ensure that the electronic device to be awakened may receive the Wi-Fi awakening message. The Wi-Fi chip of the electronic device to be awakened awakens its own major MCU chip according to the awakening message after receiving the Wi-Fi awakening message broadcast by the target electronic device.

In the above embodiment, when the electronic device detects necessity of awakening the electronic device to be awakened from the hibernate mode, the electronic device will obtain the target electronic device in the same target local area network as the electronic device to be awakened, and then send the awakening instruction to the target electronic device, such that the target electronic device broadcasts in the target local area network the awakening message for awakening the electronic device to be awakened according to the awakening instruction. The above process achieves the purpose of remotely awakening the electronic device to be awakened from the hibernate mode, which brings about great convenience.

As shown in Fig. 3 that is a flow chart showing another method for awakening an electronic device according to an exemplary embodiment of the present disclosure. The method includes the following steps.

In step 301, an awakening instruction for awakening an electronic device to be awakened is received.

In this step, a target electronic device may receive the awakening instruction sent by the electronic device through the related technology.

In step 302, an awakening message is generated according to the awakening instruction.

The target electronic device generates the awakening message through the related technology according to the received awakening instruction. Alternatively, the awakening message is the Wi-Fi awakening message in the related technology, and the Wi-Fi chip of the electronic device to be awakened still can receive the Wi-Fi awakening message even if it enters the low power mode.

In step 303, the awakening message is broadcast in a current target local area network, such that the electronic device to be awakened in the same target local area network executes an awakening operation after receiving the awakening message.

In order to ensure that the electronic device to be awakened may receive the Wi-Fi awakening message, the target electronic device may broadcast the awakening message in the current target local area network, and the major MCU chip of the electronic device to be awakened is awakened according to the Wi-Fi awakening message after the Wi-Fi chip thereof receives the Wi-Fi awakening message.

In the above embodiment, the target electronic device may receive the awakening instruction, generate the Wi-Fi awakening message automatically and broadcast the awakening message in the current local area network. Then the major MCU chip of the electronic device to be awakened is awakened after the electronic device to be awakened in the same local area network receives the awakening message. The above process achieves the purpose of remotely awakening the electronic device to be awakened from the hibernate mode, which brings about great convenience.

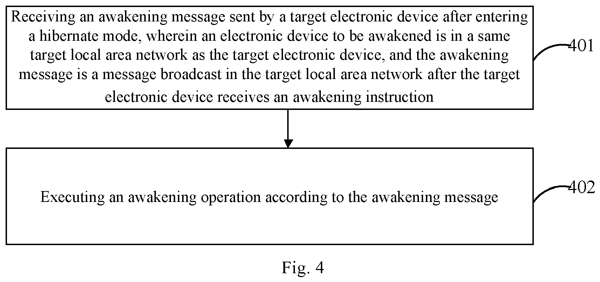

As shown in Fig. 4 that is a flow chart showing another method for awakening an electronic device according to an exemplary embodiment of the present disclosure. The method includes the following steps.

In step 401, an awakening message sent by a target electronic device is received after entering a hibernate mode, in which an electronic device to be awakened is in a same target local area network as the target electronic device, and the awakening message is a message broadcast in the target local area network after the target electronic device receives an awakening instruction.

In this step, the electronic device sends the awakening instruction to the target electronic device in the same target local area network as the electronic device to be awakened in the above method, such that the target electronic device generates the awakening message according to the awakening instruction and broadcasts the awakening message in the target local area network.

Since the electronic device to be awakened has entered the hibernate mode, it is alternative to send the message to the Wi-Fi chip of the electronic device to be awakened in the low power mode. Alternatively, the awakening message is a Wi-Fi awakening message. Correspondingly, the step 401 may include step 401-1 of receiving the Wi-Fi awakening message sent by the target electronic device via the Wi-Fi chip of the electronic device to be awakened.

The Wi-Fi chip of the electronic device to be awakened may receive the Wi-Fi awakening message through the related technology to execute an awakening operation in the subsequent step.

In step 402, the awakening operation is executed according to the awakening message.

Alternatively, the step 402 may include step 402-1 of awakening a major MCU chip of the electronic device to be awakened according to the awakening message.

The major MCU chip of the electronic device to be awakened is preset its own mechanism of being awakened, which may be in such a way that the major MCU chip will not be awakened until the Wi-Fi chip of the electronic device to be awakened receives the Wi-Fi awakening message. In this step, the Wi-Fi chip may awaken the major MCU chip according to the awakening message through the related technology. Then, the electronic device to be awakened may start working normally.

In the above embodiment, the Wi-Fi chip of the electronic device to be awakened may receive the awakening message broadcast by the target electronic device in the target local area network, such that the major MCU chip of the electronic device to be awakened is awakened according to the received awakening message. Consequently, it is possible to remotely awaken the electronic device to be awakened from the hibernate mode, which brings about great convenience.

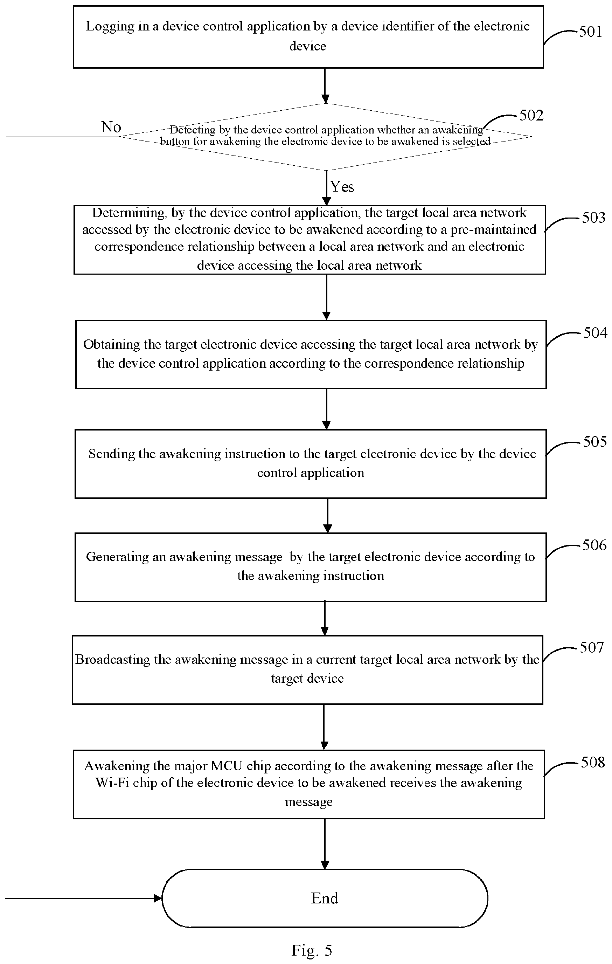

As shown in Fig. 5 that is a flow chart showing another method for awakening an electronic device according to an exemplary embodiment of the present disclosure. The method includes the following steps.

In step 501, a device control application is logged in by a device identifier of the electronic device.

In this step, the device control application pre-installed in the electronic device may be logged in by the device identifier (like phone number) through the related technology.

In step 502, the device control application detects whether an awakening button for awakening the electronic device to be awakened is selected. When the awakening button is selected, step 503 is executed. Otherwise the process of awakening the electronic device to be awakened is terminated.

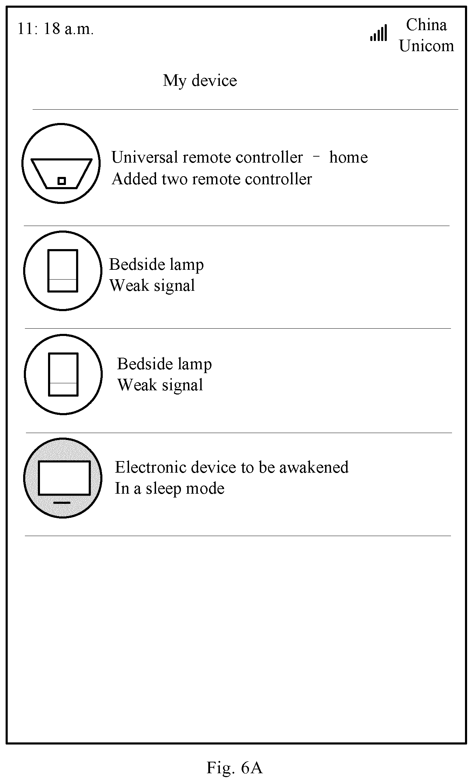

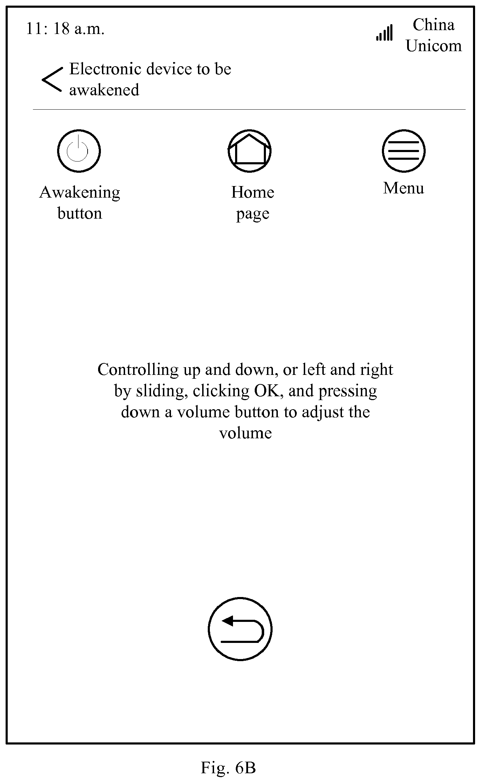

After the device control application is logged in, a list of all electronic devices controlled by the electronic device will be displayed in the interface, as shown in Fig. 6A. The user may click the electronic device to be awakened in the above list to open a control interface corresponding to the electronic device to be awakened, and a virtual awakening button is provided on the interface for controlling the electronic device to be awakened, as shown in Fig. 6B. The electronic device may detect whether the user has selected the awakening button through the related art. When the awakening button is selected, it is determined that the user needs to awaken the electronic device to be awakened remotely via the electronic device, and step 503 is executed.

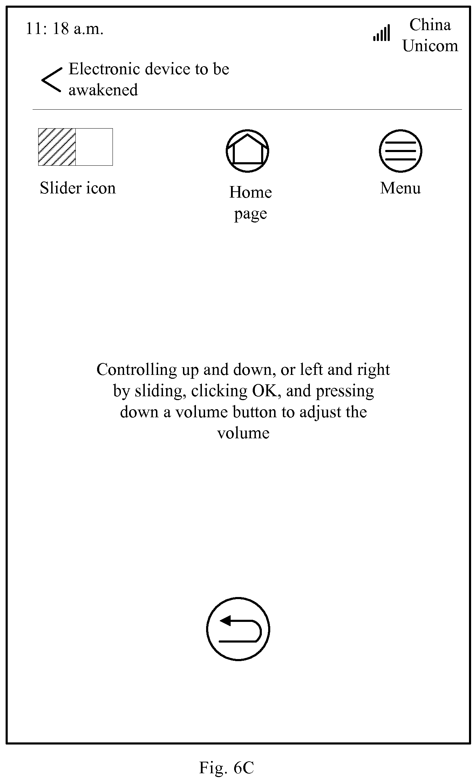

Of course, the step may be implemented in other ways. For example, after the control interface corresponding to the electronic device to be awakened is opened by the electronic device, a virtual slider icon may be provided in the control interface of the electronic device to be awakened, as shown in Fig. 6C. The electronic device may detect whether there is contact information in the slider icon through the related technology. When the contact information is detected, it may also be determined that the user needs to awaken the electronic device to be awakened remotely via the electronic device, and step 503 is executed.

In step 503, the device control application determines the target local area network accessed by the electronic device to be awakened according to a pre-maintained correspondence relationship between a local area network and an electronic device accessing the local area network.

In step 504, the device control application obtains the target electronic device accessing the target local area network according to the correspondence relationship.

In step 505, the device control application sends the awakening instruction to the target electronic device.

In this step, the electronic device generates the awakening instruction through the related technology, and sends the awakening instruction to the target electronic device, after obtaining the target electronic device.

In step 506, the target electronic device generates an awakening message according to the awakening instruction.

Alternatively, the awakening message is the Wi-Fi awakening message in the related technology, and the Wi-Fi chip of the electronic device to be awakened still can receive the Wi-Fi awakening message even if it enters the low power mode.

In step 507, the target device broadcasts the awakening message in a current target local area network.

In order to ensure that the electronic device to be awakened may receive the awakening message, the target electronic device may broadcast the awakening message in the current target local area network.

In step 508, the major MCU chip is awakened according to the awakening message after the Wi-Fi chip of the electronic device to be awakened receives the awakening message.

The major MCU chip of the electronic device to be awakened is preset its own mechanism of being awakened, which may be in such a way that the major MCU chip will not be awakened until the Wi-Fi chip of the electronic device to be awakened receives the Wi-Fi awakening message. The Wi-Fi chip may awaken the major MCU chip according to the awakening message through the related technology, after receiving the Wi-Fi awakening message. Then, the electronic device to be awakened may start working normally.

Further exemplification for the above process is presented as follows.

The user logs in the device control application pre-installed in the electronic device by the device identifier of the electronic device. The main control interface may display a list of all electronic devices controlled by the electronic device, as shown in Fig. 6A. The user may click the electronic device to be awakened in the above list to open the control interface corresponding to the electronic device to be awakened, and the virtual awakening button is provided on the interface for controlling the electronic device to be awakened, as shown in Fig. 6B. The electronic device may detect whether the user has selected the awakening button through the related technology. Or after the electronic device opens the control interface corresponding to the electronic device to be awakened, the virtual slider icon may be provided in the control interface of the electronic device to be awakened, as shown in Fig. 6C. The electronic device may detect whether there is contact information in the slider icon through the related technology.

When the user selects the awakening button or clicks the slider icon, the device control application first determines the target local area network accessed by the electronic device to be awakened according to the pre-maintained correspondence relationship, and obtains the target electronic device that also accesses the target local area network according to the correspondence relationship. The device control application generates the awakening message through the related technology and sends it to the target electronic device; the target electronic device generates the Wi-Fi awakening message through the related technology according to the awakening instruction, and broadcasts the Wi-Fi awakening message in the target local area network to ensure that the electronic device to be awakened may receive the Wi-Fi awakening message. The Wi-Fi chip of the electronic device to be awakened awakens the major MCU chip according to the awakening message after receiving the Wi-Fi awakening message broadcast by the target electronic device.

In the above embodiment, when the electronic device detects necessity of awakening the electronic device to be awakened from the hibernate mode, the electronic device will obtain the target electronic device in the same target local area network as the electronic device to be awakened, and then send the awakening instruction to the target electronic device, such that the target electronic device broadcasts in the target local area network the awakening message for awakening the electronic device to be awakened according to the awakening instruction. The above process achieves the purpose of remotely awakening the electronic device to be awakened from the hibernate mode, which brings about great convenience.

Corresponding to the previous method embodiments of awakening the electronic device, the present disclosure further provides an embodiment of an apparatus for awakening an electronic device.

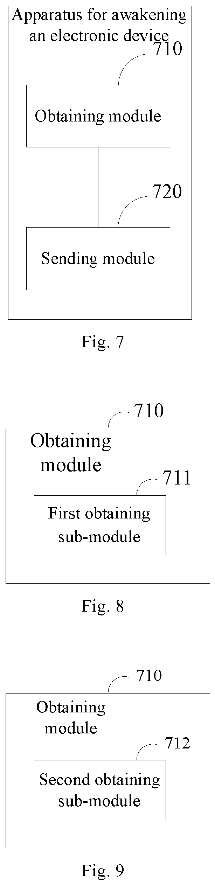

As shown in Fig. 7 that is a block diagram showing an apparatus for awakening an electronic device according to an exemplary embodiment of the present disclosure, the apparatus includes an obtaining module 710 and a sending module 720.

The obtaining module 710 is configured to obtain a target electronic device in a same target local area network as an electronic device to be awakened.

The sending module 720 is configured to send an awakening instruction to the target electronic device obtained by the obtaining module 710, such that the target electronic device broadcasts in the target local area network an awakening message for awakening the electronic device to be awakened according to the awakening instruction.

In the above embodiment, when the electronic device detects necessity of awakening the electronic device to be awakened from the hibernate mode, the electronic device will obtain the target electronic device in the same target local area network as the electronic device to be awakened, and then send the awakening instruction to the target electronic device, such that the target electronic device broadcasts in the target local area network the awakening message for awakening the electronic device to be awakened according to the awakening instruction. The above process achieves the purpose of remotely awakening the electronic device to be awakened from the hibernate mode, which brings about great convenience.

As shown in Fig. 8 that is a block diagram showing another apparatus for awakening an electronic device according to an exemplary embodiment of the present disclosure, this embodiment is based on the embodiment shown in Fig. 7. The obtaining module 710 includes: a first obtaining sub-module 711.

The first obtaining sub-module 711 is configured to obtain the target electronic device in response to a detected selection of an awakening button for awakening the electronic device to be awakened.

In the above embodiment, the awakening button is a virtual button for controlling an interface of the electronic device to be awakened.

As shown in Fig. 9 that is a block diagram showing another apparatus for awakening an electronic device according to an exemplary embodiment of the present disclosure, this embodiment is based on the embodiment shown in Fig. 7. The obtaining module 710 includes: a second obtaining sub-module 712.

The second obtaining sub-module 712 is configured to obtain the target electronic device in response to a detected presence of contact information in an icon for awakening the electronic device to be awakened.

In the above embodiment, the icon is a virtual slider icon for controlling an interface of the electronic device to be awakened.

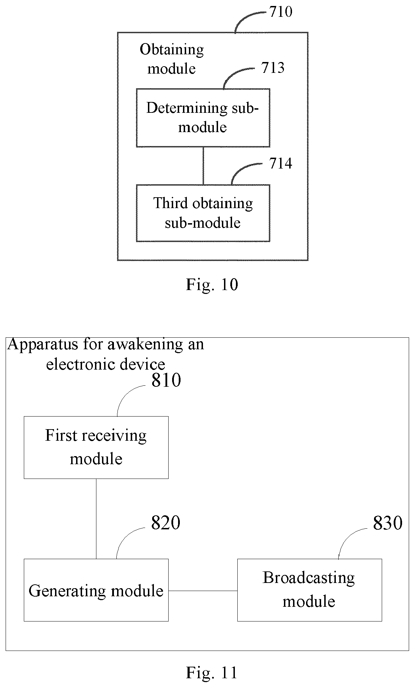

As shown in Fig. 10 that is a block diagram showing another apparatus for awakening an electronic device according to an exemplary embodiment of the present disclosure, this embodiment is based on the embodiment shown in Fig. 7. The obtaining module 710 includes: a determining sub-module 713 and a third obtaining sub-module 714.

The determining sub-module 713 is configured to determine the target local area network accessed by the electronic device to be awakened according to a pre-maintained correspondence relationship between a local area network and an electronic device accessing the local area network.

The third obtaining sub-module 714 is configured to obtain the target electronic device accessing the target local area network determined by the determining sub-module 713 according to the correspondence relationship.

In the above embodiment, after detecting that the virtual awakening button is selected or there is contact information in the virtual slider icon, the electronic device will obtain the target electronic device that accesses the target local area network according to the pre-maintained correspondence relationship between the local area network and the electronic device accessing the local area network, so as to send the awakening instruction to the target electronic device and to achieve the purpose of remotely awakening the electronic device to be awakened that enters the hibernate mode, which brings about great convenience.

As shown in Fig. 11 that is a block diagram showing another apparatus for awakening an electronic device according to an exemplary embodiment of the present disclosure, the apparatus includes a first receiving module 810, a generating module 820 and a broadcasting module 830.

The first receiving module 810 is configured to receive an awakening instruction for awakening an electronic device to be awakened.

The generating module 820 is configured to generate an awakening message according to the awakening instruction received by the first receiving module.

The broadcasting module 830 is configured to broadcast the awakening message generated by the generating module in a current target local area network, such that the electronic device to be awakened in the same target local area network executes an awakening operation after receiving the awakening message.

In the above embodiment, the awakening message is a Wi-Fi awakening message.

In the above embodiment, the target electronic device may generate the Wi-Fi awakening message automatically and broadcast it by the current local area network according to the received awakening instruction. Then, the electronic device to be awakened in the same target local area network awakens the major MCU chip after receiving the Wi-Fi awakening message. The above process achieves the purpose of remotely awakening the electronic device to be awakened from the hibernate mode, which brings about great convenience.

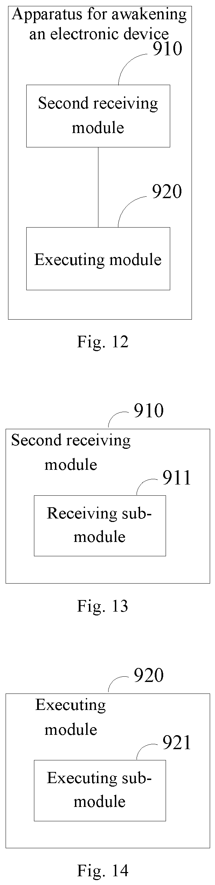

As shown in Fig. 12 that is a block diagram showing another apparatus for awakening an electronic device according to an exemplary embodiment of the present disclosure, the apparatus includes a second receiving module 910 and an executing module 920.

The second receiving module 910 is configured to receive an awakening message sent by a target electronic device after entering a hibernate mode, in which an electronic device to be awakened is in a same target local area network as the target electronic device, and the awakening message is a message broadcast in the target local area network after the target electronic device receives an awakening instruction.

The executing module 920 is configured to execute an awakening operation according to the awakening message received by the second receiving module.

As shown in Fig. 13 that is a block diagram showing another apparatus for awakening an electronic device according to an exemplary embodiment of the present disclosure, this embodiment is based on the embodiment shown in Fig. 12. The second receiving module 910 includes: a receiving sub-module 911.

The receiving sub-module 911 is configured to receive the awakening message sent by the target electronic device via a Wi-Fi chip of the electronic device to be awakened.

As shown in Fig. 14 that is a block diagram showing another apparatus for awakening an electronic device according to an exemplary embodiment of the present disclosure, this embodiment is based on the embodiment shown in Fig. 12.

The executing module 920 includes: an executing sub-module 921.

The executing sub-module 921 is configured to awaken a major MCU chip of the electronic device to be awakened according to the awakening message received by the second receiving module.

In the above embodiment, the Wi-Fi chip of the electronic device to be awakened may receive the awakening message broadcast by the target electronic device via the target local area network, so as to awaken the major MCU chip of the electronic device to be awakened according to the received awakening message, which realizes the purpose of remotely awakening the electronic device to be awakened from the hibernate mode, and hence brings about great convenience.

Correspondingly, the present disclosure further provides an apparatus for awakening an electronic device. The apparatus includes:
a processor, and
a memory configured to store an instruction executable by the processor,
in which the processor is configured to:
   obtain a target electronic device in a same target local area network as an electronic device to be awakened; and
   send an awakening instruction to the target electronic device, such that the target electronic device broadcasts in the target local area network an awakening message for awakening the electronic device to be awakened according to the awakening instruction.

Correspondingly, the present disclosure further provides an apparatus for awakening an electronic device. The apparatus includes:
a processor, and
a memory configured to store an instruction executable by the processor,
in which the processor is configured to:
   receive an awakening instruction for awakening an electronic device to be awakened;
   generate an awakening message according to the awakening instruction; and
   broadcast the awakening message in a current target local area network, such that the electronic device to be awakened in the same target local area network executes an awakening operation after receiving the awakening message.

Correspondingly, the present disclosure further provides an apparatus for awakening an electronic device. The apparatus includes:
a processor, and
a memory configured to store an instruction executable by the processor,
in which the processor is configured to:
   receive an awakening message sent by a target electronic device after entering a hibernate mode, in which an electronic device to be awakened is in a same target local area network as the target electronic device, and the awakening message is a message broadcast in the target local area network after the target electronic device receives an awakening instruction; and
   execute an awakening operation according to the awakening message.

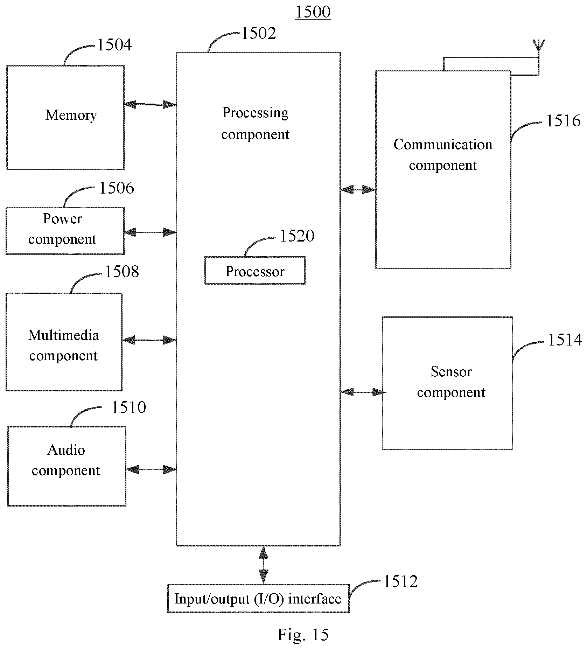

As shown in Fig. 15 that is a block diagram showing an apparatus 1500 for awakening an electronic device according to an exemplary embodiment of the present disclosure. For example, the apparatus 1500 may be an electronic device, like an intelligent terminal that may be a mobile phone, a computer, a digital broadcasting terminal, message sending and receiving equipment, a smart power plug, a smart sphygmomanometer, a game controller, a tablet device, a medical device, fitness equipment and a personal digital assistant.

Referring to Fig. 15, the device 1500 may include one or more of the following components: a processing component 1502, a memory 1504, a power component 1506, a multimedia component 1508, an audio component 1510, an input/output (I/O) interface 1512, a sensor component 1514, and a communication component 1516.

The processing component 1502 typically controls overall operations of the device 1500, such as the operations associated with display, telephone calls, data communications, camera operations, and recording operations. The processing component 1502 may include one or more processors 1520 to execute instructions to perform all or part of the steps in the above described methods. Moreover, the processing component 1502 may include one or more modules which facilitate the interaction between the processing component 1502 and other components. For instance, the processing component 1502 may include a multimedia module to facilitate the interaction between the multimedia component 1508 and the processing component 1502.

The memory 1504 is configured to store various types of data to support the operation of the device 1500. Examples of such data include instructions for any applications or methods operated on the device 1500, contact data, phonebook data, messages, pictures, video, etc. The memory 1504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1506 provides power to various components of the device 1500. The power component 1506 may include a power management system, one or more power sources, and any other components associated with the generation, management, and distribution of power in the device 1500.

The multimedia component 1508 includes a screen providing an output interface between the device 1500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 15015 includes a front camera and/or a rear camera. The front camera and the rear camera may receive an external multimedia datum while the device 1500 is in an operation mode, such as a photographing mode or a video mode. Each of the front camera and the rear camera may be a fixed optical lens system or have focus and optical zoom capability.

The audio component 1510 is configured to output and/or input audio signals. For example, the audio component 1510 includes a microphone ("MIC") configured to receive an external audio signal when the device 1500 is in an operation mode, such as a call mode, a recording mode, and a voice recognition mode. The received audio signal may be further stored in the memory 1504 or transmitted via the communication component 1516. In some embodiments, the audio component 1510 further includes a speaker to output audio signals.

The I/O interface 1512 provides an interface between the processing component 1502 and peripheral interface modules, such as a keyboard, a click wheel, buttons, and the like. The buttons may include, but are not limited to, a home button, a volume button, a starting button, and a locking button.

The sensor component 1514 includes one or more sensors to provide status assessments of various aspects of the device 1500. For instance, the sensor component 1514 may detect an open/closed status of the device 1500, relative positioning of components, e.g., the display and the keypad, of the device 1500, a change in position of the device 1500 or a component of the device 1500, a presence or absence of user contact with the device 1500, an orientation or an acceleration/deceleration of the device 1500, and a change in temperature of the device 1500. The sensor component 1514 may include a proximity sensor configured to detect the presence of nearby objects without any physical contact. The sensor component 1514 may also include a light sensor, such as a CMOS or CCD image sensor, for use in imaging applications. In some embodiments, the sensor component 1514 may also include an accelerometer sensor, a gyroscope sensor, a magnetic sensor, a pressure sensor, or a temperature sensor.

The communication component 1516 is configured to facilitate communication, wired or wirelessly, between the device 1500 and other devices. The device 1500 can access a wireless network based on a communication standard, such as WiFi, 2G, or 3G, or a combination thereof. In one exemplary embodiment, the communication component 1516 receives a broadcast signal or broadcast associated information from an external broadcast management system via a broadcast channel. In one exemplary embodiment, the communication component 1516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1504, executable by the processor 1520 in the device 1500, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method for awakening a first electronic device (101) from hibernate mode using a second electronic device, comprising:
obtaining a same local area network as the first electronic device according to a pre-maintained correspondence relationship between a local area network and the first electronic device accessing the local area network, wherein the correspondence relationship is maintained on the second electronic device;
obtaining a target electronic device in the same target local area network as the first electronic device ; and
sending an awakening instruction to the target electronic device (102), such that the target electronic device broadcasts in the target local area network an awakening message for awakening the first electronic device according to the awakening instruction.

2. The method according to claim 1, wherein obtaining a target electronic device in a same target local area network as a first electronic device (101) comprises:
obtaining the target electronic device in response to a detected selection of an awakening button for awakening the first electronic device (101-1).

3. The method according to claim 2, wherein the awakening button is a virtual button for controlling an interface of the first electronic device .

4. The method according to any one of claims 1 to 3, wherein obtaining a target electronic device in a same target local area network as a first electronic device (101) comprises:
obtaining the target electronic device in response to a detected presence of contact information in an icon for awakening the first electronic device (101-1').

5. The method according to claim 4, wherein the icon is a virtual slider icon for controlling an interface of the first electronic device .

6. The method according to claim 1, comprising, at the target electronic device:
receiving the awakening instruction;
generating the awakening message according to the awakening instruction (302); and
broadcasting the awakening message in a current target local area network, such that the first electronic device in the same target local area network executes an awakening operation after receiving the awakening message (303).

7. The method according to any one of claims 1 to 6, wherein the awakening message is a wireless fidelity (Wi-Fi) awakening message.

8. A method for awakening a first electronic device (101) according to claim 1, comprising, at the first electronic device:
receiving the awakening message broadcast by the target electronic device, after the first electronic device has entered a hibernate mode (401); and
executing an awakening operation according to the awakening message (402).

9. The method according to claim 8, wherein receiving an awakening message sent by a target electronic device (401) comprises:
receiving the awakening message sent by the target electronic device via a Wi-Fi chip of the first electronic device.

10. The method according to claim 8, wherein executing an awakening operation (402) comprises:
awakening a major microcontroller unit (MCU) chip of the first electronic device.

11. The method according to any of the above claims, wherein the first electronic device is an intelligent television.

12. An apparatus for awakening a first electronic device from hibernate mode, comprising:
a processor;
a memory configured to store an instruction executable by the processor;
wherein the processor is configured to perform the method for awakening a first electronic device from hibernate mode according to any one of claims 1 to 5.

13. A system comprising an apparatus according to claim 12 and an apparatus comprising:
a processor;
a memory configured to store an instruction executable by the processor;
wherein the processor is configured to perform the method for awakening a first electronic device from hibernate mode according to claim 6 or 7.

14. A system comprising an apparatus according to claim 12 or 13 and an apparatus comprising:
a processor;
a memory configured to store an instruction executable by the processor;
wherein the processor is configured to perform the method for awakening a first electronic device from hibernate mode according to any one of claims 8 or 10.

15. Anon-transitory computer-readable storage medium having stored therein instructions that, when executed by a processor of a device, causes the device to perform the method for awakening a first electronic device from hibernate mode according to any one of claims 1 to5.

## Patentansprüche

1. Verfahren zum Aufwecken eines ersten elektronischen Geräts (101) aus einem Ruhemodus mit einem zweiten elektronischen Gerät, das Folgendes beinhaltet:
Erlangen eines selben lokalen Netzwerks wie das erste elektronische Gerät gemäß einer vorbestimmten Korrespondenzbeziehung zwischen einem lokalen Netzwerk und dem ersten elektronischen Gerät, das auf das lokale Netzwerk zugreift, wobei die Korrespondenzbeziehung auf dem zweiten elektronischen Gerät aufrechterhalten wird;
Einholen eines elektronischen Zielgeräts im selben lokalen Zielnetzwerk wie das erste elektronische Gerät; und
Senden eines Aufweckbefehls zu dem elektronischen Zielgerät (102), so dass das elektronische Zielgerät in dem lokalen Zielnetzwerk eine Aufwecknachricht zum Aufwecken des ersten elektronischen Geräts gemäß dem Aufweckbefehl broadcastet.

2. Verfahren nach Anspruch 1, wobei das Einholen eines elektronischen Zielgeräts in einem selben lokalen Zielnetzwerk wie ein erstes elektronisches Gerät (101) Folgendes beinhaltet:
Einholen des elektronischen Zielgeräts als Reaktion auf eine erkannte Auswahl einer Aufwecktaste zum Aufwecken des ersten elektronischen Geräts (101-1).

3. Verfahren nach Anspruch 2, wobei die Aufwecktaste eine virtuelle Taste zum Steuern einer Oberfläche des ersten elektronischen Geräts ist.

4. Verfahren nach einem der Ansprüche 1 bis 3, wobei das Einholen eines elektronischen Zielgeräts im selben lokalen Zielnetzwerk wie das erste elektronische Gerät (101) Folgendes beinhaltet:
Einholen des elektronischen Zielgeräts als Reaktion auf eine erkannte Anwesenheit einer Kontaktinformation in einem Icon zum Aufwecken des ersten elektronischen Geräts (101-1').

5. Verfahren nach Anspruch 4, wobei das Icon ein virtuelles Schieber-Icon zum Steuern einer Oberfläche des ersten elektronischen Geräts ist.

6. Verfahren nach Anspruch 1, das an dem elektronischen Zielgerät Folgendes beinhaltet:
Empfangen des Aufweckbefehls;
Erzeugen der Aufwecknachricht gemäß dem Aufweckbefehl (302); und
Broadcasten der Aufwecknachricht in einem aktuellen lokalen Zielnetzwerk, so dass das erste elektronische Gerät im selben lokalen Zielnetzwerk einen Aufweckvorgang nach dem Empfangen der Aufwecknachricht (303) durchführt.

7. Verfahren nach einem der Ansprüche 1 bis 6, wobei die Aufwecknachricht eine WiFi-(Wireless Fidelity)-Aufwecknachricht ist.

8. Verfahren zum Aufwecken eines ersten elektronischen Geräts (101) nach Anspruch 1, das Folgendes an dem ersten elektronischen Gerät beinhaltet:
Empfangen der von dem elektronischen Zielgerät gebroadcasteten Aufwecknachricht, nachdem das erste elektronische Gerät in einen Ruhemodus (401) eingetreten ist; und
Durchführen eines Aufweckvorgangs gemäß der Aufwecknachricht (402).

9. Verfahren nach Anspruch 8, wobei das Empfangen einer von einem elektronischen Zielgerät (401) gesendeten Aufwecknachricht Folgendes beinhaltet:
Empfangen der von dem elektronischen Zielgerät gesendeten Aufwecknachricht über einen WiFi-Chip des ersten elektronischen Geräts.

10. Verfahren nach Anspruch 8, wobei das Durchführen eines Aufweckvorgangs (402) Folgendes beinhaltet:
Aufwecken eines MCU-(Major Microcontroller Unit)-Chips des ersten elektronischen Geräts.

11. Verfahren nach einem der vorherigen Ansprüche, wobei das erste elektronische Gerät ein intelligenter Fernseher ist.

12. Vorrichtung zum Aufwecken eines ersten elektronischen Geräts aus einem Ruhemodus, die Folgendes umfasst:
einen Prozessor;
einen Speicher, konfiguriert zum Speichern eines vom Prozessor ausführbaren Befehls;
wobei der Prozessor zum Durchführen des Verfahrens zum Aufwecken eines ersten elektronischen Geräts aus einem Ruhemodus nach einem der Ansprüche 1 bis 5 konfiguriert ist.

13. System, umfassend eine Vorrichtung nach Anspruch 12, wobei eine Vorrichtung Folgendes umfasst:
einen Prozessor;
einen Speicher, konfiguriert zum Speichern eines vom Prozessor ausführbaren Befehls;
wobei der Prozessor zum Durchführen des Verfahrens zum Aufwecken eines ersten elektronischen Geräts aus einem Ruhemodus nach Anspruch 6 oder 7 konfiguriert ist.

14. System, das eine Vorrichtung nach Anspruch 12 oder 13 umfasst, wobei eine Vorrichtung Folgendes umfasst:
einen Prozessor;
einen Speicher, konfiguriert zum Speichern eines vom Prozessor ausführbaren Befehls;
wobei der Prozessor zum Durchführen des Verfahrens zum Aufwecken eines ersten elektronischen Geräts aus einem Ruhemodus nach einem der Ansprüche 8 oder 10 konfiguriert ist.

15. Nichtflüchtiges computerlesbares Speichermedium, auf dem Befehle gespeichert sind, die bei Ausführung durch einen Prozessor eines Geräts bewirken, dass das Gerät das Verfahren zum Aufwecken eines ersten elektronischen Geräts aus einem Ruhemodus nach einem der Ansprüche 1 bis 5 durchführt.

## Revendications

1. Procédé de réveil d'un premier dispositif électronique (101) d'un mode d'hibernation en utilisant un deuxième dispositif électronique, comprenant :
obtenir un même réseau local que le premier dispositif électronique conformément à une relation de correspondance pré-maintenue entre un réseau local et le premier dispositif électronique accédant au réseau local, où la relation de correspondance est maintenue sur le deuxième dispositif électronique ;
obtenir un dispositif électronique cible dans le même réseau local cible que le premier dispositif électronique ; et
envoyer une instruction de réveil au dispositif électronique cible (102), de telle sorte que le dispositif électronique cible diffuse dans le réseau local cible un message de réveil pour réveiller le premier dispositif électronique conformément à l'instruction de réveil.

2. Procédé selon la revendication 1, dans lequel obtenir un dispositif électronique cible dans un même réseau local cible qu'un premier dispositif électronique (101) comprend :
obtenir le dispositif électronique cible en réponse à une sélection détectée d'un bouton de réveil pour réveiller le premier dispositif électronique (101-1).

3. Procédé selon la revendication 2, dans lequel le bouton de réveil est un bouton virtuel pour contrôler une interface du premier dispositif électronique.

4. Procédé selon l'une quelconque des revendications 1 à 3, dans lequel obtenir un dispositif électronique cible dans un même réseau local cible qu'un premier dispositif électronique (101) comprend :
obtenir le dispositif électronique cible en réponse à une présence détectée d'informations de contact dans une icône pour réveiller le premier dispositif électronique (101-1').

5. Procédé selon la revendication 4, dans lequel l'icône est une icône de curseur virtuel pour contrôler une interface du premier dispositif électronique.

6. Procédé selon la revendication 1, comprenant, au dispositif électronique cible :
recevoir l'instruction de réveil ;
générer le message de réveil conformément à l'instruction de réveil (302) ; et
diffuser le message de réveil dans un réseau local cible courant, de telle sorte que le premier dispositif électronique dans le même réseau local cible exécute une opération de réveil après avoir reçu le message de réveil (303).

7. Procédé selon l'une quelconque des revendications 1 à 6, dans lequel le message de réveil est un message de réveil fidélité sans fil (Wi-Fi).

8. Procédé de réveil d'un premier dispositif électronique (101) selon la revendication 1, comprenant, au premier dispositif électronique :
recevoir le message de réveil diffusé par le dispositif électronique cible, après que le premier dispositif électronique fut entré dans un mode d'hibernation (401) ; et
exécuter une opération de réveil conformément au message de réveil (402).

9. Procédé selon la revendication 8, dans lequel recevoir un message de réveil envoyé par un dispositif électronique cible (401) comprend :
recevoir le message de réveil envoyer par le dispositif électronique cible via une puce Wi-Fi du premier dispositif électronique.

10. Procédé selon la revendication 8, dans lequel le fait d'exécuter une opération de réveil (402) comprend :
réveiller une puce majeure d'unité de microcontrôleur (MCU) du premier dispositif électronique.

11. Procédé selon l'une quelconque des revendications précédentes, dans lequel le premier dispositif électronique est une télévision intelligente.

12. Appareil pour réveiller un premier dispositif électronique d'un mode d'hibernation, comprenant :
un processeur ;
une mémoire configurée pour stocker une instruction exécutable par le processeur ;
où le processeur est configuré pour mettre en oeuvre le procédé de réveil d'un premier dispositif électronique d'un mode d'hibernation selon l'une quelconque des revendications 1 à 5.

13. Système comprenant un appareil selon la revendication 12 et un appareil comprenant :
un processeur ;
une mémoire configurée pour stocker une instruction exécutable par le processeur ;
où le processeur est configuré pour mettre en oeuvre le procédé de réveil d'un premier dispositif électronique d'un mode d'hibernation selon l'une quelconque des revendications 6 ou 7.

14. Système comprenant un appareil selon la revendication 12 ou 13 et un appareil comprenant :
un processeur ;
une mémoire configurée pour stocker une instruction exécutable par le processeur ;
où le processeur est configuré pour mettre en oeuvre le procédé de réveil d'un premier dispositif électronique d'un mode d'hibernation selon l'une quelconque des revendications 8 ou 10.

15. Support de stockage non transitoire lisible par ordinateur ayant des instructions stockées dessus qui, lorsque exécutées par un processeur d'un dispositif, font que le dispositif mette en oeuvre le procédé de réveil d'un premier dispositif électronique d'un mode d'hibernation selon l'une quelconque des revendications 1 à 5.
